# EUROPÄISCHE PATENTANMELDUNG

(11) **EP 0 658 375 A1**
(43) Veröffentlichungstag der Anmeldung: **21.06.1995**
(21) Anmeldenummer: 94117256.1
(22) Anmeldetag: 02.11.1994
(51) Int. Cl.: B01J 37/02, B05B 13/06

(54) **Verfahren und Vorrichtung zum definierten Imprägnieren von Wabenkörpern mit parallelen Strömungskanälen**

(30) Priorität: 16.12.1993 DE 4342914
(71) Anmelder: Degussa Aktiengesellschaft, D-60311 Frankfurt (DE)
(72) Erfinder: Fehn, Edmund, D-79618 Rheinfelden (DE); Schmidt, Felix, Dr., D-79618 Rheinfelden (DE); Plessow, Jörg, D-61352 Bad Homburg (DE)

(57) **Zusammenfassung**

Die Erfindung betrifft ein Verfahren zum definierten Imprägnieren von Wabenkörpern sowie eine Vorrichtung zur Durchführung des Verfahrens. Die Imprägnierlösungen werden mit Injektorkanülen direkt in den Strömungskanälen der Wabenkörper zerstäubt.

## Beschreibung

Die Erfindung betrifft ein Verfahren zum definierten Imprägnieren von zylindrischen Wabenkörpern mit Imprägnierlösungen. Die Wabenkörper weisen parallel zur Zylinderachse angeordnete Strömungskanäle sowie zwei zu den Strömungskanälen senkrecht orientierte Querschnittsflächen auf. Die Querschnittsflächen der Wabenkörper können den jeweiligen räumlichen Einbauanforderungen entsprechend geformt sein. Am häufigsten werden kreisförmige, quadratische, rechteckige und ovale Querschnitte verwendet. Die Strömungskanäle sind über den Querschnitt der Wabenkörper in einem Raster angeordnet, welches je nach Typ des Wabenkörpers unterschiedlich ausgebildet sein kann.

Solche Wabenkörper werden in großer Stückzahl in der Automobilabgaskatalyse eingesetzt. Sie bestehen entweder aus entsprechend gefalteten und verschlungenen Metallblechen oder werden durch Extrusion keramischer Massen hergestellt. Je nach Anwendungsfall weisen sie zwischen 5 bis zu 100 Strömungskanälen pro cm² auf. Diese Wabenkörper werden mit einer Schicht aus feinteiligen hochoberflächigen Metalloxiden belegt, die als Träger für die katalytisch aktiven Komponenten dient. Für die Trägerschicht wird in der Regel temperaturstabilisiertes γ-Aluminiumoxid verwendet, dem zur Modifikation der katalytischen Wirkung noch Promotoren und Basismetalle beigefügt sein können. Die Beschichtung der Wabenkörper mit diesen hochoberflächigen Metalloxiden kann z. B. durch Tauchen der Wabenkörper in eine wäßrige Suspension der hochoberflächigen Metalloxide erfolgen. Die daraus resultierende Schichtdicke liegt zwischen etwa 10 und 130 µm.

Bei den katalytisch aktiven Elementen, handelt es sich gewöhnlich um Platin, Palladium und/oder Rhodium. Sie werden entweder in Form ihrer wasserlöslichen Verbindungen direkt der wäßrigen Suspension der hochoberflächigen Metalloxide zugefügt, oder sie werden erst nach Beschichten der Wabenkörper mit den hochoberflächigen Metalloxiden durch Imprägnieren aufgebracht. Dazu werden die beschichteten Wabenkörper in entsprechende Edelmetall-Lösungen getaucht.

Beiden Imprägnierverfahren ist gemeinsam, daß die katalytisch aktiven Komponenten sehr gleichmäßig über den Querschnitt der Wabenkörper aufgebracht werden. Es ist jedoch wünschenswert, die katalytisch aktiven Komponenten mit definierten Konzentrationsprofilen quer zur Strömungsrichtung des Abgases auf die Wabenkörper aufbringen zu können. Aus der DE 39 12 915 C1 ist nämlich bekannt, daß die Konzentration der katalytisch aktiven Komponenten in den Randbereichen der Wabenkörper höher sein sollte als in der Mitte, um eine optimale Abgasreinigung bei geringstmöglichem Einsatz von katalytisch aktiven Elementen zu garantieren.

Es ist somit Aufgabe der vorliegenden Erfindung, ein Verfahren anzugeben sowie eine Vorrichtung zur Verfügung zu stellen, die es gestatten, beschichtete Wabenkörper mit definierten Konzentrationsprofilen der katalytisch aktiven Komponenten sowohl in Querrichtung als auch in Längsrichtung zu belegen.

Diese Aufgabe wird gelöst durch ein Verfahren zum definierten Imprägnieren von zylindrischen Wabenkörpern mit Imprägnierlösungen, wobei die Wabenkörper zwei zur Zylinderachse senkrecht orientierte Querschnittsflächen und zur Zylinderachse parallele Strömungskanäle aufweisen, die über den Querschnitt der Wabenkörper in einem Raster angeordnet sind.

Das Verfahren ist dadurch gekennzeichnet, daß die Imprägnierlösungen mit Injektorkanülen direkt in den Strömungskanälen zerstäubt werden.

Erfindungsgemäß werden also die Wabenkörper nicht mehr durch Tauchen in Imprägnierlösungen gleichmäßig mit den katalytisch aktiven Komponenten belegt, sondern die katalytisch aktiven Komponenten werden direkt mit Injektorkanülen in den Strömungskanälen zerstäubt. Dazu müssen die Injektorkanülen mindestens eine Länge aufweisen, die der Länge der Strömungskanäle entspricht. Das eine Ende der Injektorkanülen ist dabei mit Zuführungsleitungen für die Imprägnierlösungen verbunden, während das andere Ende der Injektorkanülen zwar in axialer Richtung verschlossen ist, jedoch im Endbereich radiale Bohrungen als Zerstäuberbohrungen aufweist.

Die Imprägnierlösungen können während des Einfahrens der Injektorkanülen in die Strömungskanäle und/oder während des Herausfahrens der Injektorkanülen aus den Strömungskanälen zerstäubt werden. Die Imprägnierung der Strömungskanäle eines Wabenkörpers kann im Prinzip nacheinander mit einer einzigen Injektorkanüle erfolgen, jedoch ist es vorteilhaft, zur Erhöhung der Produktivität alle Strömungskanäle gleichzeitig unter Verwendung jeweils einer Injektorkanüle für jeden der Strömungskanäle zu imprägnieren.

Beim Imprägnieren von Keramikwabenkörpern hat sich gezeigt, daß darauf verzichtet werden kann, für jeden Strömungskanal eine separate Injektorkanüle zur Verfügung zu stellen. Wegen der Porosität des Keramikwabenkörpers wird nämlich jeweils mindestens ein angrenzender Strömungskanal rund um den Injektionskanal parasitär durch Diffusion mit benetzt. Mit einer Injektorkanüle können somit mindestens neun angrenzende Strömungskanäle imprägniert werden. Es ist deshalb ausreichend, nur für jeden übernächsten Nachbarn eines Strömungskanals wieder eine neue Injektorkanüle vorzusehen. Damit vermindert sich die erforderliche Zahl von Injektorkanülen auf ein Viertel gegenüber dem Wert bei voller Belegung jedes Strömungskanals mit einer Injektorkanüle. Diese gezielte Anordnung der Injektorkanülen kann auch dazu verwendet werden, um definierte Konzentrationsprofile der katalytisch aktiven Komponenten über den Querschnitt eines Wabenkörpers zu erzeugen.

Inhomogene Imprägnierprofile können in vorteilhafter Weise auch dadurch erzeugt werden, daß die Injektorkanülen mit separaten Zuführleitungen für die Imprägnierlösungen versehen werden. Dadurch wird es möglich, die Imprägnierlösungen den einzelnen Injektorkanülen mit unterschiedlichen Drucken zuzuführen, um auf diese Weise unterschiedliche Zerstäuberleistungen und damit unterschiedliche Konzentrationsprofile zu erzeugen. Weiterhin ist es mit dieser Vorgehensweise möglich, in einem Arbeitsgang verschiedene Imprägnierlösungen in verschiedenen Bereichen des Wabenkörpers aufzubringen. Mit dem erfindungsgemäßen Verfahren ist es also möglich, definierte Imprägnierprofile bezüglich der Konzentration der katalytisch aktiven Komponenten zu erzeugen, als auch bezüglich der Zusammensetzung der katalytisch aktiven Komponenten.

Das erfindungsgemäße Verfahren erlaubt aber auch die Herstellung definierter Imprägnierprofile längs der Strömungskanäle der Wabenkörper. Dies geschieht in einfacher Weise durch Verändern der Geschwindigkeit während des Bewegens der Injektorkanülen in den Strömungskanälen und/oder durch Variation des Druckes, unter dem die Imprägnierlösungen den Injektorkanülen zugeführt werden. Dadurch wird es also möglich, die katalytisch aktiven Komponenten in den zu imprägnierenden Wabenkörpern in ganz definierter Weise zu plazieren. Dies ist mit den bisher bekannten Verfahren aus dem Stand der Technik nicht möglich.

Die Vorrichtung zur Durchführung des Verfahrens enthält eine Halteplatte mit Durchgangsbohrungen und eine dazu parallele Tragplatte für die zu imprägnierenden Wabenkörper. Die Tragplatte weist Führungsbohrungen auf, die mit den Durchgangsbohrungen der Halteplatte korrespondieren und im Raster der Strömungskanäle der Wabenkörper angeordnet sind. Der Abstand zwischen Halteplatte und Tragplatte kann um einen Betrag, der gleich der Länge der Strömungskanäle ist, verändert werden. Eine dem gewünschten Imprägnierergebnis entsprechende Anzahl von Injektorkanülen ist mit ihren ersten Enden in den Durchgangsbohrungen der Halteplatte befestigt. Die Zuführung der Imprägnierlösungen zu den Injektorkanülen erfolgt von der der Tragplatte abgewandten rückwärtigen Seite der Halteplatte. Die zweiten Enden der Injektorkanülen, die über die Vorderseite der Halteplatte weit hinausragen, sind in axialer Richtung verschlossen und weisen im Endbereich radiale Zerstäuberbohrungen auf. Die Injektorkanülen sind mit ihren zweiten Enden durch die Führungsbohrungen der Tragplatte hindurchgeführt.

Die Länge der Injektorkanülen ist zweckmäßigerweise so bemessen, daß die Enden bei Einstellung des maximalen Abstandes zwischen Halteplatte und Tragplatte gerade mit einem geringen Betrag über die Tragplatte hinausragen, um auf diese Weise eine Fixierung und Justierung für den auf die Tragplatte aufgesetzten Wabenkörper zu bilden.

Durch Vermindern des Abstandes zwischen Halteplatte und Tragplatte fahren die Injektorkanülen in die Strömungskanäle hinein.

Eine bevorzugte Ausführungsform der erfindungsgemäßen Vorrichtung wird anhand der folgenden Figuren erläutert.

Es zeigen
- Figur 1:: Querschnitt durch die erfindungsgemäße Vorrichtung bei maximalem Abstand zwischen Halteplatte und Tragplatte mit auf die Tragplatte aufgesetztem Wabenkörper kurz vor Beginn des Imprägnierzyklusses.
- Figur 2:: Querschnitt durch die erfindungsgemäße Vorrichtung bei minimalem Abstand zwischen Halteplatte und Tragplatte.
- Figur 3:: Eine vergrößerte Ansicht des freien Endes einer Injektorkanüle mit axialem Verschluß und radialen Zerstäuberbohrungen.
- Figur 4:: Bevorzugte Anordnung der Injektorkanülen beim Imprägnieren eines Keramikwabenkörpers.

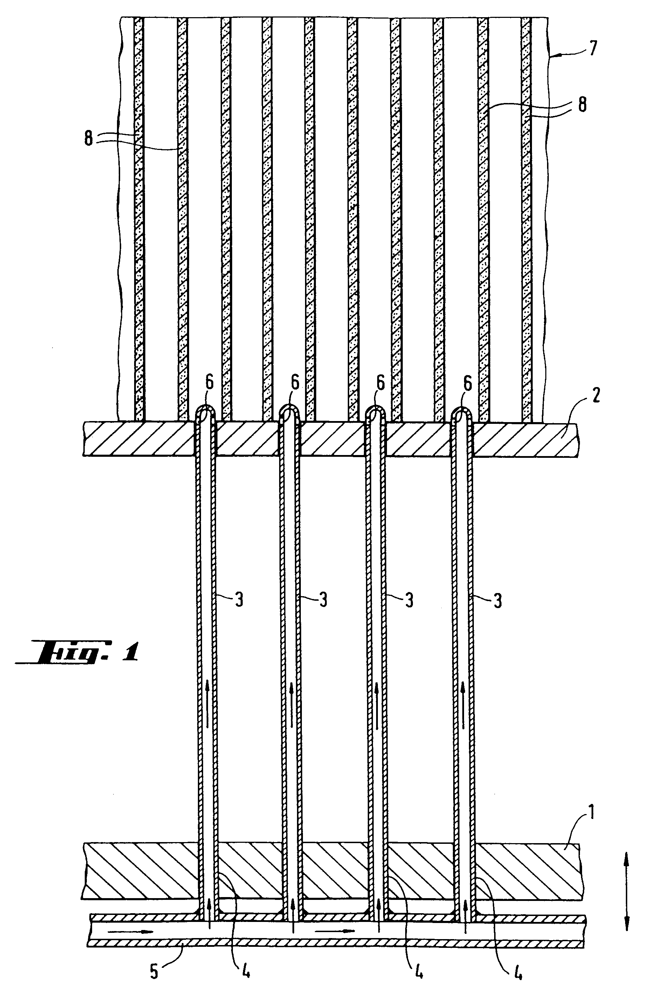

Figur 1 zeigt einen Querschnitt durch die erfindungsgemäße Vorrichtung. Halteplatte (1) und Tragplatte (2) sind mit ihrem maximalen Abstanz zueinander dargestellt.

Die Injektorkanülen (3) sind mit ihrem einen Ende in den Durchgangsbohrungen (4) der Halteplatte befestigt. Die Injektorkanülen werden von der rückwärtigen Seite der Halteplatte, die der Tragplatte abgewandt ist, über Zuführungsleitungen (5) mit Edelmetall-Lösungen versorgt. Prinzipiell kann jede Injektorkanüle oder verschiedene Gruppen von Injektorkanülen mit separaten Zuführungsleitungen für die Imprägnierlösungen versehen werden. Die freien Enden der Injektorkanülen ragen bei dem hier gezeigten maximalen Abstand zwischen Halteplatte und Tragplatte gerade noch mit ihren Zerstäuberbohrungen (6) über die Oberfläche der Tragplatte hinaus. Die freien Enden der Injektorkanülen sind als Halbkugel ausgebildet und schließen die Injektorkanülen axial ab. Der zu beschichtende Keramikwabenkörper (7) ist auf diese halbkugelförmigen Enden der Injektorkanülen aufgesetzt und wird durch sie fixiert und justiert. Die Strömungskanäle des Wabenkörpers werden durch die Wandungen (8) gebildet.

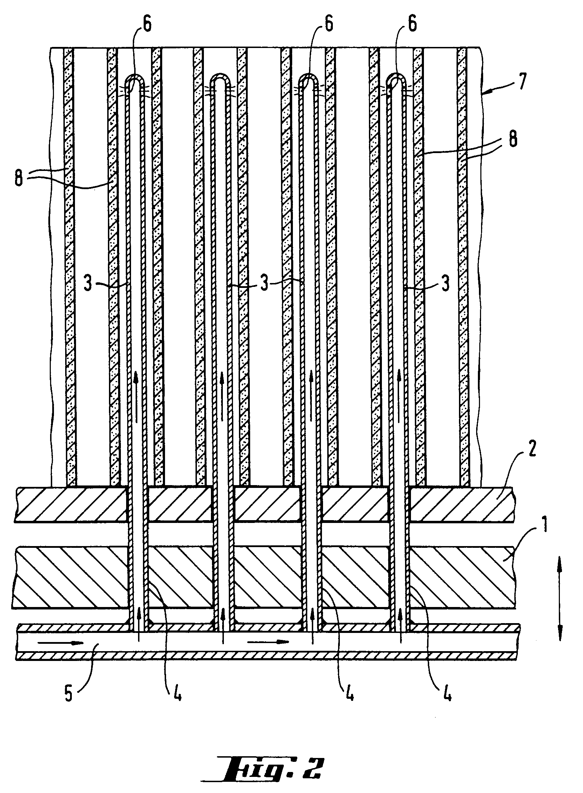

Figur 2 zeigt den Zustand bei minimalem Abstand zwischen Haltplatte und Tragplatte. Zur Imprägnierung des Wabenkörpers werden die Imprägnierlösungen in die Injektorkanülen hineingepumpt und bei gleichzeitigem Bewegen der Injektorkanülen in den Strömungskanälen durch die Zerstäuberbohrungen gleichmäßig zerstäubt.

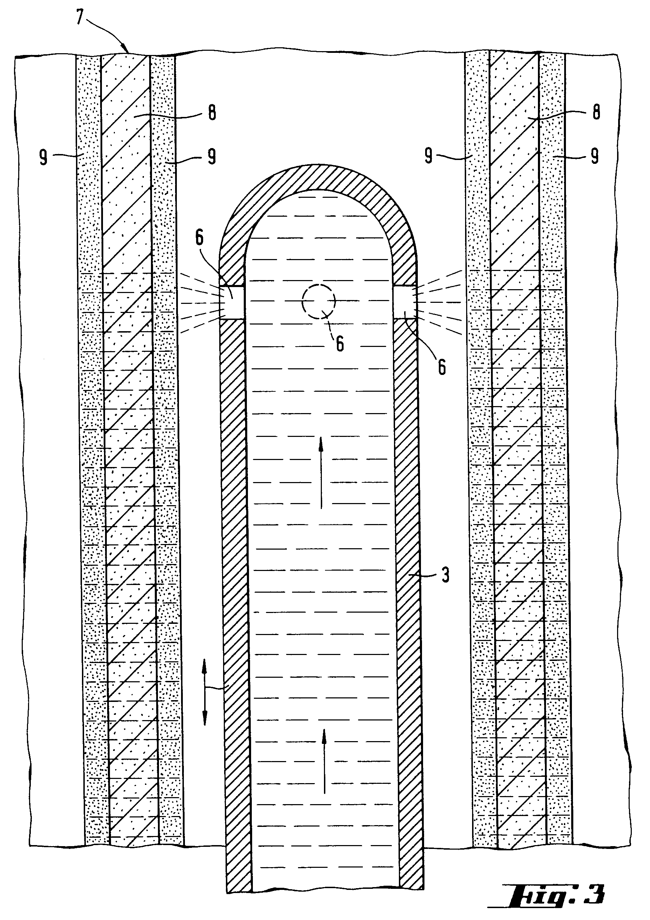

Figur 3 zeigt eine vergrößerte Darstellung des freien Endes einer Injektorkanüle in einem Strömungskanal eines Keramikwabenkörpers. Das Ende der Injektorkanüle ist vorteilhafterweise halbkugelförmig ausgebildet. Auf diese Weise kann sie als Zentrier- und Justierhilfe für die auf die Tragplatte aufzusetzenden Wabenkörper dienen. Dicht unterhalb des halbkugelförmigen Abschlusses der Injektorkanülen befinden sich die radialen Zerstäuberbohrungen (6). Auf den Wandungen (8) der Strömungskanäle befindet sich die Beschichtung (9) aus hochoberflächigen Metalloxiden, die durch Aufsprühen der Imprägnierlösung mit den katalytisch aktiven Elementen imprägniert wird. Infolge der Porosität des Keramikkörpers durchdringt die Imprägnierlösung die Wandungen (8) und imprägniert auch die Beschichtung (9) in benachbarten Strömungskanälen.

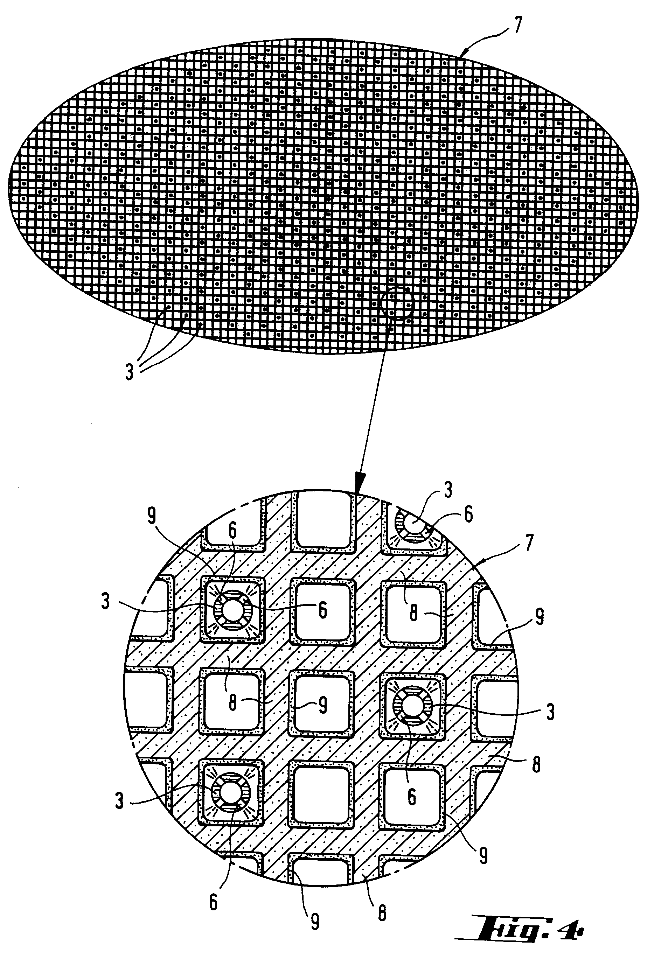

Figur 4 zeigt den Querschnitt eines ovalen Wabenkörpers mit in einem quadratischen Raster angeordneten Strömungskanälen, die von den Wandungen (8) gebildet werden. Die Innenflächen der Strömungskanäle sind mit einer hochoberflächigen Metalloxidbeschichtung (9) als Träger für die durch Imprägnieren aufzubringenden katalytisch aktiven Komponenten versehen. Die Injektorkanülen (3) sind im Muster eines Rösselsprungs beim Schach über den Querschnitt des Wabenkörpers verteilt. Die nicht direkt imprägnierten Strömungskanäle erhalten ihre Imprägnierung durch Diffusion aus den benachbarten Strömungskanälen. Figur 4 zeigt nur ein spezielles Anordnungsmuster für die Injektorkanülen. Andere Muster sind ebenfalls möglich.

## Patentansprüche

1. Verfahren zum definierten Imprägnieren von zylindrischen Wabenkörpern mit Imprägnierlösungen, wobei die Wabenkörper zwei zur Zylinderachse senkrecht orientierte Querschnittsflächen und zur Zylinderachse parallele Strömungskanäle aufweisen, die über den Querschnitt der Wabenkörper in einem Raster angeordnet sind,
**dadurch gekennzeichnet**,
daß die Imprägnierlösungen mit Injektorkanülen in die Strömungskanäle eingeführt und dort zerstäubt werden.

2. Verfahren nach Anspruch 1,
**dadurch gekennzeichnet**,
daß die Imprägnierlösungen während des Einfahrens der Injektorkanülen in die Strömungskanäle und/oder während des Herausfahrens der Injektorkanülen aus den Strömungskanälen zerstäubt werden.

3. Verfahren nach Anspruch 2,
**dadurch gekennzeichnet**,
daß alle Strömungskanäle gleichzeitig unter Verwendung jeweils einer Injektorkanüle für jeden Strömungskanal imprägniert werden.

4. Verfahren nach Anspruch 2,
**dadurch gekennzeichnet**,
daß eine Auswahl von Strömungskanälen gleichzeitig unter Verwendung jeweils einer Injektorkanüle für jeden ausgewählten Strömungskanal imprägniert wird.

5. Verfahren nach den Ansprüchen 3 oder 4,
**dadurch gekennzeichnet**,
daß die Imprägnierlösungen von den einzelnen Injektorkanülen mit unterschiedlichen Zerstäubungsraten zur Erzeugung eines inhomogenen Imprägnierprofils über den Querschnitt des Wabenkörpers zerstäubt werden.

6. Verfahren nach den Ansprüchen 3 oder 4,
**dadurch gekennzeichnet**,
daß die Imprägnierlösungen den einzelnen Injektorkanülen mit unterschiedlichen Konzentrationen und/oder unterschiedlichen Zusammensetzungen zur Erzeugung eines inhomogenen Imprägnierprofils über den Querschnitt des Wabenkörpers zugeführt werden.

7. Verfahren nach den Ansprüchen 3 oder 4,
**dadurch gekennzeichnet**,
daß die Injektorkanülen mit zeitlich veränderlicher Geschwindigkeit und/oder zeitlich veränderlichen Zerstäubungsraten der Imprägnierlösungen in den Strömungskanälen zur Erzeugung eines inhomogenen Imprägnierprofils längs der Strömungskanäle bewegt werden.

8. Vorrichtung zur Durchführung der Verfahren nach den Ansprüchen 1 bis 7,
**dadurch gekennzeichnet**,
daß die Vorrichtung enthält
i. eine Halteplatte mit Durchgangsbohrungen und eine dazu parallele Tragplatte für die zu imprägnierenden Wabenkörper mit Führungsbohrungen, wobei Durchgangsbohrungen und Führungsbohrungen zueinander korrespondieren und im Raster der Strömungskanäle der Wabenkörper angeordnet sind,
ii. eine Anzahl von Injektorkanülen mit ersten und zweiten Enden, wobei die Injektorkanülen an den zweiten Enden axial verschlossen sind und im Endbereich Zerstäuberbohrungen aufweisen und
iii.Zuleitungen für die Imprägnierlösungen zu den ersten Enden der Injektorkanülen,
wobei der Abstand zwischen Halteplatte und Tragplatte zur Bewegung der Injektorkanülen in den Strömungskanälen der Wabenkörper verändert werden kann.
